# EUROPEAN PATENT APPLICATION

(11) **EP 3 587 092 A1**
(43) Date of publication of application: **01.01.2020**
(21) Application number: 18181048.2
(22) Date of filing: 30.06.2018
(51) Int. Cl.: B29C 71/00, B29C 64/35

(54) **METHOD FOR TREATMENT OF ELEMENTS OBTAINED BY AN ADDITIVE MANUFACTURING PROCESS**

(71) Applicant: Technische Universität München, 80333 München (DE)
(72) Inventor: Abstreiter, Tobias, 84435 Lengdorf (DE)
(74) Representative: Leißler-Gerstl, Gabriele

(57) **Abstract**

A method for treatment of elements obtained by an additive manufacturing process comprises applying on the element a solvent in liquid or gaseous form.

## Description

The present invention is concerned with a method for treatment of elements obtained by an additive manufacturing process.

Additive processes for preparing elements for various applications have become very popular. Additive processes, also known as three-dimensional (3D) printing processes are available in different forms starting from building materials in liquid, viscous, solid or powder form. Fused filament fabrication (FFF) uses a continuous filament of a thermoplastic material which in molten form is deposited on the growing workpiece.

Another type of 3D printing processes uses building material in powder form which is selectively solidified by first sintering, melting, fusing, or binding the powder at selected sites for producing elements. Elements are built by depositing powdery material layer after layer. The building material can be a polymer, metal, ceramic, or a composite material. One class of polymers that is useful for additive manufacturing is the class of polyamide polymers and polyamide blends. An element is formed by applying a layer of material in powder form to a building platform, and then based on computer generated data selectively heating or bonding the powder in those parts of the layer which shall become part of the element. For example the powder can be fused or melted by infrared radiation, sintered by a laser beam, or bonded by a binder material. The platform is then lowered, another layer of material in powder form is added and again melted, fused, or bonded. These steps are repeated until the element has been built.

Selective heating can be obtained by a laser beam, as for example in selective laser sintering (SLS), or by infrared radiation, such as in multi-jet fusion (MJF) processes. Selective solidifying can be obtained by binder-jetting processes among others. The main principle of these solidifying processes is the use of a powder which is treated to solidify at predetermined sites to yield the product. Additive sintering processes are particularly useful for producing elements with delicate structures, fine channels and/or complex forms.

Building materials used in additive processes are often polymers and the quality of the elements obtained in these processes depends on the polymer used. A class of polymers that is highly desirable for additive manufacturing is polyamide, a highly robust polymer which is resistant to the environment, and has good mechanical properties. Therefore, polyamide in powder form is a useful building material and is used in multi-jet fusion (MJF) and selective laser sintering (SLS) processes. Other known processes use light for solidifying photoreactive liquid resin, for example laser-based stereolithography (SLA) and digital light processing (DLP). Another known process is Multijet-Modeling (MJM) where material is heated and "trickled" out of Nano-Jets on the build platform, hardened and cured with UV light.

Although additive manufacturing processes as known in the art are very useful because they save time and cost compared to manufacturing processes using traditional methods, one disadvantage of these very useful techniques is that the surface smoothness of the obtained objects is not satisfying, the surface of the elements obtained has a surface roughness Rₐ which, depending on the manufacturing process used, can be in the range of up to 10 µm or even up to 20 µm. Therefore, for many applications it is necessary to smoothen the surface before the elements can be used. Methods for smoothening the surface are known, but all have disadvantages and are detrimental to the structure and/or mechanical strength of the elements.

US 2017/0327658 discloses a process for surface treatment of an object wherein the object is dipped in concentrated acid to impregnate the surface and then is heated to a temperature between 140 and 180°C, until melting of the surface is obtained. This treatment is very harsh and can result in formation of holes or cracks in the surface.

DE 10 2014 102 137 discloses a process for treatment and dyeing of surfaces wherein an object is dipped in a hot solution comprising a dye for up to 6 hours wherein the dye solution has a temperature between 60 and 180°C. The process comprises at least three steps wherein in a first step the objects are pretreated by milling, grinding, or polishing. After this step formic acid vapor can be applied to further smoothen the surface. In a second step the elements are dyed by using a mixture of dye and water having a temperature of at least 60° and up to 180°C. In a third step the surface of the object is impregnated and/or sealed by applying a polymer solution. This process has disadvantages. Mechanical treatment such as milling, grinding and polishing, and the use of formic acid at high temperatures, can damage or deteriorate elements or parts thereof. Such treatment is particularly undesirable for elements having delicate parts, channels, holes etc., because those parts or sites can be destroyed or at least impaired or damaged. On the other hand, the use of formic acid vapor is undesirable; precautions have to be taken to avoid that formic acid vapor escapes into the atmosphere.

As on the one hand elements obtained by additive manufacturing processes are very promising and are produced in increasing amounts, and on the other hand a high quality surface is necessary, it was an object of the present invention to provide a process for smoothening, refining or finishing the surface of an element obtained by an additive manufacturing process which does not or essentially not damage the surface, maintains the complexity of the structure and form of the element, can be carried out in short time and avoids the use of milling, grinding, and polishing steps and also the use of high temperatures. Some materials that are used for additive manufacturing processes, in particular thermoplastic polymers, cannot be smoothened by mechanical grinding, therefore, it is of high interest to provide a method to smoothen the surface of all those types of materials.

It was found that it is possible to provide elements obtained by an additive manufacturing process with a smooth surface by treating the elements with a process as defined in claim 1, which allows to smoothen surfaces of elements with very delicate parts, with high complexity, with channels, holes and fine structures in a timely manner and at room temperature or slightly above or below. The parts have high quality and the mechanical strength is not impaired by the method of the present invention.

The method of the present invention can be used for elements that have been obtained by additive manufacturing processes, wherein a polymer, such as polyamide, PMMA, POM, PC, or PSU, is used as building material to form an element. A valuable building material is polyamide and it is used in different types. Elements that are treated according to the present invention can be built by any suitable polymer that dissolves or softens in the presence of HFIP or a HFIP comprising mixture. Examples are elements that have been built as described above by MJF, SLS processes using polyamide powder as building material and an energy source like a laser or infrared radiation to create a solid structure from the powder, binder jetting processes using PMMA as building material and a binder for creating the solid structure, or using PC, POM, PSU as building material and an FFF process for creating the solid structure. Also elements obtained with DLP, SLA and MJM processes can be treated by the method of the present invention. MJF and SLS are particularly useful for preparing complicated elements with very delicate structures, as the powder bed supports the elements.

The method as defined in the claims is versatile and allows to adapt the conditions according to the properties that are desirable for an element. Moreover, the method of the present invention provides a surface that is very well suited for being dyed.

### Definitions

The term "additive manufacturing" as it is used in the present application, comprises powder sintering as well as binder jetting or FFF processes. It includes a process where a polymer such as polyamide is first melted, fused, sintered, or bonded and then solidified at predetermined sites. In other words, it is a process, where a polymer like polyamide is formed layer by layer into a solid element. It also comprises light induced processes like SLA, DLP and MJM. In particular, the term "additive manufacturing" as it is used in the present application, comprises a process where a thermoplastic polymer or a polymer powder is solidified in a predetermined shape or pattern to build an object or element.

The term "element" when used in this application refers to a product that has been obtained by additive manufacturing. An element can be made or can be comprised of any usable polymer.

The term "polymer" comprises polymers obtained from one type of monomer or from two or more type of polymers. It comprises homopolymers, copolymers, blockpolymers and mixtures of different types of polymers.

The term "polyamide element" when used in this application refers to an element that has been obtained by an additive manufacturing process by using polyamide or a material comprising polyamide as building material.

The term "polyamide" comprises one type of polyamide, a mixture of two or more types of polyamide, polyamide copolymers such as PA6/PPO, as well as polyamide blends. It also comprises polymers known as "nylon".

The term "polyamide powder" comprises one type of polyamide powder or a powder mixture of two or more types of polyamide as well as polyamide blends, i.e. blends of one or more polyamide powders with other powders, like other polymer powders, metal powders, ceramic powders, fibers, etc.

When a temperature is indicated for application of a liquid, the temperature refers to the temperature of this liquid. The application of a "liquid at x°C" means that the liquid has temperature x°C, when it is applied and that the temperature of the liquid is maintained for the indicated time period, for example by heating means, such as a heating bath.

When a temperature is indicated for application of a vapor, the temperature refers to the temperature in the container or vacuum unit, i.e. the environment of the element to be treated.

When the term "applying" or "application" is used with regard to the treatment with a solvent like hexafluoroisopropanol (HFIP), dichloromethane, tetrahydrofuran, this shall mean that the solvent in liquid or gaseous form is applied on the element such that the element is fully or partially wetted or contacted by the solvent. This can be obtained by means as known to the skilled person, for example by dipping elements into the solvent such that the element is fully surrounded by the solvent or such that selected parts are wetted by the solvent. This can be achieved by using a device for vaporizing a solvent as described in detail below, or by laying elements in wells or containers and filling the wells or containers with the solvent or in any other mode that is known to the skilled person. It is important that the solvent contacts the whole surface of an element and can also flow into channels, holes etc., or, if this intended, contacts selected parts of the surface.

A time period for application of the solvent is the time wherein the liquid or solvent has been brought into contact with the element until removal of the solvent, for example when applying solvent in vapor form it is the time from injecting it until withdrawing it. When using a liquid it is for example the time for dipping the element into the solvent. Although some solvent can still be present on the element after the "active" application time, i.e. after removal of the solvent or the element respectively, this is not deemed as application time.

The term "solvent" comprises a single organic solvent or a mixture of two or more solvents. Furthermore, the term "solvent" comprises a solvent in liquid or gaseous form. In particular the term "solvent" is used for a solvent that comprises HFIP.

The term "solvent comprising HFIP" includes HFIP as only solvent or a mixture of HFIP with at least one further solvent, that is compatible with HFIP, i.e. the term comprises HFIP or a mixture of HFIP with other solvents.

"Solidifying" of a powder can be obtained by fusing, sintering, melting, or binding a powder.

The term "chamber" when used in this application refers to a treatment chamber wherein the elements are treated. The chamber can be a vacuum chamber or a chamber comprising heating means like an external or internal microwave unit or ultrasound unit.

The surface roughness of a material or element refers to the texture on the surface. It is quantified by deviations in the profile, i.e. deviations in a direction that is normal to the surface. Measured values for the profile result from scanning the actual profile with a probe. Surface imperfections, such as cracks, scratches and dents, should not be part of the profile and should not be included in the measured value. Roughness parameters that are usually used are Rₐ - arithmetical mean roughness value, wherein the arithmetical mean of the absolute values of the profile deviations from the mean line of the roughness profile is measured, or R_{z} - mean roughness depth, where the mean value of i (usually i=5) profile deviations from i sampling length is measured.

In the present application, when it is referred to surface roughness, this refers to Rₐ values, i.e. arithmetical mean roughness values except the context tells otherwise.

The term "functionalizing agent" refers to an agent that adds or introduces a function to the element or the surface of the element, respectively. The function can be a chemical, physical, esthetical etc. function.

The method of the present invention can have an influence on the color of the element. Elements obtained with an MJF process usually are grey, the basic polyamide material is white but carbon black is added to improve the heating by infrared radiation and a white material is added to provide for accurate contours. Surprisingly, when treating elements obtained by MJF, which have a grey color, with the method of the present invention, the elements at the surface become black.

Elements that have been produced by SLS using polyamide as building material are white or black, as polyamide powder usually is white or black, i.e. the color of such SLS elements does not change by a treatment according to the present invention.

Elements, in particular white elements, that have been treated by the method of the present invention have a smooth surface that can be dyed by conventional dyeing processes. These elements can be dyed in many different tones because of their smooth white surface which has not been densified by mechanical treatment.

The method of the present invention is useful for any element that has been obtained by an additive manufacturing method from a polymer material that is softened or dissolved by HFIP or a HFIP comprising solvent at application temperature. Polymers that are used in additive manufacturing processes are known to the skilled person. Examples for polymers that can be used as building material to form an element are duroplastic or thermoplastic polymers. Examples of polymers and polymer classes that are useful are polyamide, acrylates such as polymethyl methacrylate (PMMA), polyoxy methylene (POM), polyethylene terephthalate (PET), polyethylene terephtalate glycol (PETG), polyether block amide (PEBA), poly carbonates (PC), polyethylene furanoate (PEF), polylactide (PLA), polyurethanes such as thermoplastic polyurethane (TPU), polysulfones (PSU) such as polyethersulfones (PESU), and polyphenylsulfones (PPSU), polyimides, polyetherimides (PEI), polyketones (PK), styrene polymers and copolymers such as acrylonitrile butadiene styrene (ABS), acrylonitrile styrene acrylate (ASA), or triblock polymers of polystyrene and poly(ethylene oxide) blocks (ABA), or a thermoplastic polymer comprising polyetherimide and polycarbonate, which is available as Ultem 9085, or copolymers, blends, or mixtures of all above-mentioned materials.

The method of the present invention is particularly useful for polyamide comprising elements. Polyamide is a valuable building material and it is used in different types. Suitable polyamides are aliphatic, semi-aromatic and aromatic polyamides, for example polyamide 6 (PA6), polyamide 6.6 (PA6.6), polyamide 11 (PA11), polyamide 12 (PA12), PA 4.6 (PA4.6), polyamide 612 (PA612), polyphthalamide (PPA), or thermoplastic co-polyamides, or blended or filled polyamdes such as a blend of aluminum powder and polyamide powder that is available as alumide, or polyamide powder filled with particles like glass particles, or copolymers, blends, or mixtures thereof.

Elements that can be smoothened by the method of the present invention can be for example those built as described above by MJF, SLS processes using polyamide powder as building material and an energy source like a laser or infrared radiation to create a solid structure from the powder, binder jetting processes using PMMA as building material and a binder for creating the solid structure, or using PC, POM, PSU as building material and an FFF process for creating the solid structure, or by light induced processes such as DLP, SLA, or MJM. MJF and SLS are particularly useful for preparing complicated elements with very delicate structures, as the powder bed supports the elements.

The favorable results are obtained by using the method of the present invention. It has surprisingly been found that the surface of elements can be smoothened by applying a solvent comprising HFIP on an element for a time period of about 1 second to about 60 minutes or more and thereafter removing it. By configuring temperature and time period of the application optimal results can be obtained.

The solvent, i.e. HFIP or a combination comprising HFIP and at least one other solvent, can be applied in liquid or gaseous form. If the solvent is applied in liquid form, the time period for application should be in a range from about 1 sec to about 60 min, for example about 5 seconds to about 45 minutes, such as 1 to 35 minutes. The time period depends on the temperature, the solvent or solvent combination used and the type and size of the element. If the element has many channels, holes, delicate parts, it takes longer to smoothen the complete surface, whereas for a small element and/or an element with a simple shape, smoothening can occur faster, for example within 1 sec or a few seconds to about a few minutes when a liquid solvent is used. The time range for the smoothening step can be determined based on parameters like solvent to be used, polymer used for the element, temperature and pressure, and surface roughness. When a liquid solvent is used for a polymer like polyamide, a time range of about 1 to about 10 minutes has been found suitable, for example when ambient conditions regarding temperature and pressure are used. When a solvent in gaseous form is used, a time range of about 5 seconds to about 60 minutes, depending on type of polymer, type of element, pressure, temperature among others, can be used. When using elements made of polyamide a time range of about 2 minutes to about 45 minutes has been found suitable.

The method of the present invention can be carried out at any temperature at which the solvent is in liquid or gaseous form. When using ambient pressure about -3°C to about 58°C is useful when using HFIP. The temperature will be different when pressure is applied and it can be different when a solvent mixture is used. One great advantage of the method of the present invention is that it can be carried out at room temperature or slightly above. A convenient temperature range is between about 0°C and about 35°C, such as 15 to 30°C.

The solvent to be used comprises or consists of HFIP, which provides for fast smoothening of the surface of the elements. As the treatment is very fast, it can be of interest to decelerate the speed of smoothening. This can be done either by decreasing the temperature of application, such as a temperature in the range of about 0 to about 20°C. On the other hand, this can be achieved by "diluting" the main treatment solvent HFIP by a HFIP compatible solvent. It has been found that the combination of HFIP and acetone allows a longer treatment as smoothening takes a bit longer. Other HFIP compatible solvents, like other halogen containing solvents, such as dichloromethane (DCM) can be used. Any solvent that is miscible with HFIP and does not have a negative influence on the element can be used. The amount of further solvents can be up to the amount that is compatible with HFIP and allows smoothening. When one or more other solvents are used a ratio of HFIP to other solvents can be in any range, such as a range of 1000:1 to 1:1. An optimal ratio for a specific element can be found by routine experiments.

The application of the solvent in liquid form can be done in any known manner. For example, an element can be contacted with liquid HFIP by dipping it into the solvent, by spraying the solvent on the element etc.

The solvent can also be applied in gaseous form, i.e. as a vapor. HFIP has a boiling point of about 58°C and, therefore, can be vaporized easily.

Application of HFIP in vaporized form can be achieved in any known manner. For example HFIP can be heated in a container and the element can be contacted with the gaseous HFIP. Methods for vaporizing solvents are well-known in the art.

It has been found that a device as described below, is particularly useful for applying vaporized solvent on an element.

The contacting time when using vaporized solvent is longer than for the use of a liquid and can be in a range of about 1 min to about 45 min or even longer, such as 5 to 25 min, for example 8 to 18 min.. The time period depends on the type and amount of solvent used, the temperature used, the size and shape of the element, the surface roughness, pressure etc. Optimal results can be obtained at room temperature which is very convenient as neither heating nor cooling is necessary. The time period can be shortened by using a temperature above room temperature, such as 25 to 40°C, good results can be achieved for example at a temperature of 30 to 35°C. If a temperature in the range of 30 to 40°C is used, the time period can be shorter for example in the range of about 1 min to about 5 min.

If the solvent is applied for a longer period, the element softens, contours can become blurred or delicate parts or channels can be destroyed.

Moreover, the time of application also depends on the surface roughness. Elements that have been obtained by SLS usually have a higher surface roughness than elements that have been obtained by MJF. Therefore, the time period for getting smooth surfaces can be higher for SLS elements than for MJF elements.

It has been found that the best results can be obtained when the contact time between element and vaporized solvent is in the range between 3 and 15 min, such as 8 to 12 min, in particular when the treatment is carried out at room temperature. The contact time can be shorter at higher temperature and longer at lower temperature. Moreover, the contact time can be adapted by combining the main solvent HFIP with another solvent that deactivates or activates the smoothening and softening effect of HFIP on polyamide. When the time period is too long, the shape of the element can be adversely affected by rounding of edges and melting of delicate parts. On the other hand, if the time period is too short, the surface will not be smoothened sufficiently.

The solvent or solvent vapor is applied at least once on the element, the application step can be repeated. An application one to five times, such as one, two or three times has been found useful. The application time mentioned above refers to the time used for contact of an element with the solvent in one run or step, i.e. when the solvent is applied more than once, the application time for each run is indicated, for example, an element can be treated once for 10 minutes, or twice, for example one run for 4 minutes and one run for 5 minutes, or any other combination and number of runs.

The amount of HFIP used can be determined by a skilled person. For example an amount of about 0.5 to about 5 ml per L volume of the chamber used for treatment, such as 1 to 3 ml HFIP per L volume of the chamber can be used.

The method of the present invention can be carried out in any device known for contacting elements with a liquid or vapor. When solvent vapor is used, a device that provides for vaporisation of the solvent is used, such as a device comprising a chamber, for example a device of the present invention as described in detail below. As an example, the chamber can be a vacuum chamber or a chamber comprising a microwave and/or unltrasound unit and the surface of an element can be smoothened by laying the element into said chamber, preferably such that the area in contact with bottom or wall of the chamber is as small as possible, preferably by using an element contact area with support points, for example needle or ball like parts.

In the case of a vacuum chamber after closing air is withdrawn by a vacuum pump. Air can be removed from the chamber until a pressure as defined or desired, such as a pressure of about 1 Pascal to about 90 kPa or more has been achieved. The exact pressure can be determined by a pressure gauge. When a pressure as desired, for example more than about 1 Pa up to less than about 90 kPa, has been achieved, the vacuum pump can be turned off. One advantage of this embodiment is that it is not necessary to heat or cool the system, as evacuation as well as treatment with the method of the present invention yields good results in reasonable time at room temperature. If necessary, the system can be heated or cooled. Moreover, it is possible to use high vacuum such as about 1 Pa or less, bit in most cases is not necessary, but it is sufficient to apply a vacuum in the range of about 0.01 to 0.9 bar. A pressure of less than 0.01 bar can for example be useful, if a combination of HFIP with another solvent that has a higher boiling point is used, or for other reasons. A vacuum in the range of 0.05 to 0.5 bar has been found suitable, in particular 0.1 to 0.3 bar. If a higher temperature, such as 30 to 40°C, or a lower temperature in the range of 3 to 15°C is used the pressure can be adapted accordingly. i.e can be decreased or increased.

In the case of a chamber comprising a microwave or ultrasound unit after closing the chamber is heated by microwaves or by ultrasonic waves, for example by an external microwave or ultrasound unit.

An amount of solvent is introduced into the chamber. This is done as known to the skilled person, for example by using a syringe, a valve or a peristaltic pump.

When using a vacuum chanber, as the boiling point of HFIP is only about 58°C, a vacuum in the range of 0.01 to 0.9 bar, such as 0.05 to 0.5 bar is sufficient to vaporize this solvent. If a mixture of solvents is used the vacuum can be adapted accordingly.

When using a chamber with microwave and/or ultrasonic unit the conditions can be adapted accordingly.

The solvent can be transferred into the chamber either actively by pumping it into the chamber or, for a vacuum chamber, passively by opening a valve of the vacuum chamber such that the pressure in the vacuum chamber transports the solvent into the chamber. After introduction of the solvent, the syringe can be removed or the peristaltic pump can be turned off, respectively. If a valve has been used, this can be closed.

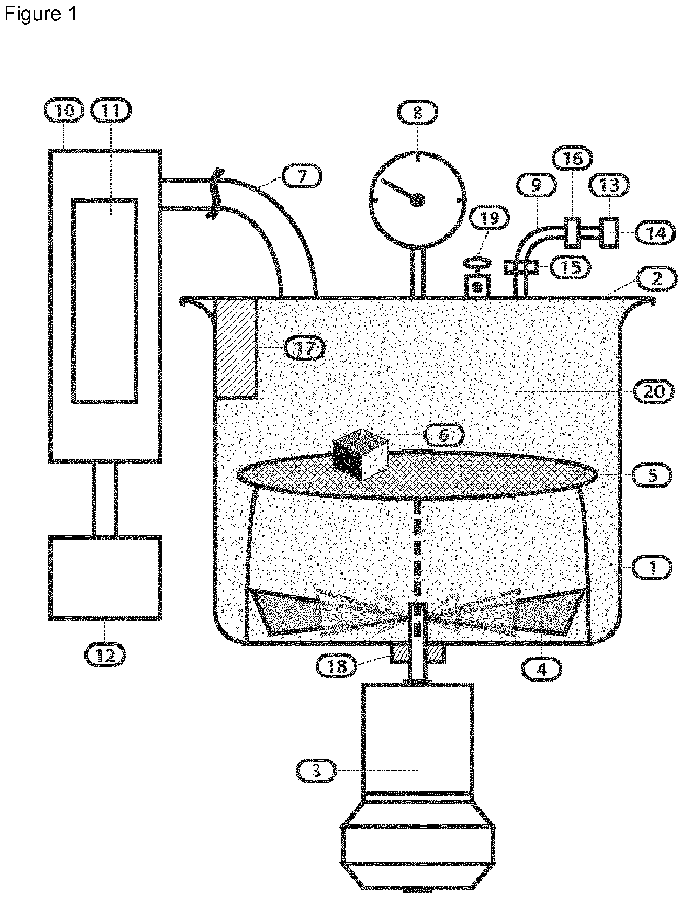

To improve the distribution of vapor it is useful to use a distributor means such as a fan, impeller or other device for circulation of the gaseous solvent. In one embodiment of the device of the present invention at least one impeller is provided at the bottom of the vacuum chamber. One or more impellers can be used, for example one to five impellers. One first impeller at the bottom of the vacuum chamber provides generally for circulation of gas/air. Further impellers can be used to provide for a turbulent stream within the vacuum chamber to improve the contact between gaseous solvent and elements. It is also possible to use one or more flow elements for creating turbulent flow, as can be seen in Figure 1.

It has been found that a turbulent flow is particularly useful for complex structures and also for chained, woven or non-woven structures. The turbulent flow provides that the solvent/air mixture comes into contact with all parts of a complex structure and also provides for a short contact only to avoid that parts of the complex structure are melted together or softened.

When treatment of the element by vapor has been finished, solvent is withdrawn, evacuated or extracted from the chamber. For better withdrawal, extraction or evacuation, a venting valve is opened to allow introduction of a volume of air in about the same amount as solvent volume is withdrawn. The amount of gas that is introduced by venting a valve can be adapted by the size of the valve or by active means such as a pump. The time period for evacuation is not critical, it can be in the range of about 5 minutes or less and up to about 60 minutes or more. If the evacuation period is too short, solvent remains in the chamber and on the elements and could soften the surface and delicate parts. If the evacuation period is longer than 60 minutes, no further solvent is removed and no advantage is achieved. The element laying in the chamber is in contact with the circulating gas for a period as described above. After the treatment period the chamber is vented, for example by opening a stop valve, by introducing air via a pump and/or by opening the chamber.

When microwaves or ultrasound waves are used for vaporizing the solvent the process is carried out similar as described above by contacting elements with vaporized solvent. In this embodiment the elements are introduced in a chamber, the chamber comprises solvent, which has been added before introduction of the elements, has been added together with the elements or after introduction of the elements. The material of the chamber preferably is a material that is permeable for microwaves or ultrasonic waves, respectively. The chamber is closed and at least the inner part thereof is irradiated with microwaves or ultrasonic waves of a suitable wave length. A suitable wave length is in a range that vaporizes HFIP or a solvent mixture comprising HFIP. Thus, the microwaves and/or ultrasonic waves vaporize the solvent very fast without the need for a vacuum. To improve the contact between elements and solvent vapor distributor means can be used as outlined above.

One advantage when using microwaves and/or ultrasonic waves is that no vacuum is necessary. The contact step can be carried out at normal pressure, increased or decreased pressure. Under such conditions distributor means can be used with more efficiency. Thus, the pressure can be adapted accordingly. Whether pressure should be applied and if so in which range it has to be applied can be determined and optimized by a skilled artisan.

After solvent treatment the elements can be removed from the treatment chamber and dried. Drying can be achieved by storing, in an oven or dry box, optionally using means like a fan or any other means known to remove remaining solvent. The drying time is not critical and can be from about 5 minutes up to hours or even days such as 1 to 24 hours.

Contact of the element with solvent provides for smoothening the surface and/or for those elements, that have a grey color, for changing the color of the element to black. The surface layer becomes softer and smoother during treatment and after removal of solvent smoothness remains and surface hardens again.

In most cases an element is treated with solvent such that the whole surface is in contact with solvent and, thus, is smoothened. If only part of an element shall be smoothened, then only this part should be in contact with solvent. This can be achieved by excluding that part of the element that shall remain untreated from contact with solvent or by protecting it from contact with solvent, for example, by applying a protective layer on that part of the element that shall remain untreated, for example, by applying a layer, like a wax layer or a silicone layer.

Elements that have been treated as described above and have a white surface can be dyed very easily as the surface after treatment is smooth but not dense or compressed. The elements can be dyed as is known in the art with any type of dyes that are used for dyeing such polymers. Examples are acid dyes, basic dyes, reaction dyes, sulfur dyes, dispersion dyes etc. and mixtures thereof. The elements can be dyed in many color tones, hues, tints, and shades.

Elements obtained by treatment according to the present invention have a smooth surface which hardens and is mechanically strong and can have any color, such as a white or black color or a color tone which can be obtained as desired by dyeing. These elements can be used as they are, they can be stored until they are used, or they can be treated further with a functionalizing solution to improve or change the properties, and/or to make the surface of the element harder, glossier, more brilliant or texturized. It has been found that elements that have been treated with the method of the present invention can be dyed at lower temperatures than elements of the prior art, for example at less than 100°C and nevertheless a brilliant uniform surface can be obtained. Moreover, it has been found that when dyeing elements of the present invention, less dye is necessary and there is no need for the application of pressure. Without being bound by theory it is assumed that when using mechanical means for smoothening a surface of an element, densification or closing of pores and cells at the surface can occur, whereas the surface of elements that have been smoothened with the method of the present invention is not densified. Therefore, elements that have been smoothened by the method of the present invention take up the dye from a dye solution more easily, no pressure or high temperatures are necessary and the surface takes up the dye even if the dye solution is not supersaturated. This allows to get good and reproducable results even with less concentrated solutions.

Furthermore, smoothening and dyeing of elements can be done independently in any order, which makes the process very versatile. In one embodiment elements are first smoothened and then dyed, in another embodiment elements are first dyed and then smoothened. Dyeing can be done in the same process line as smoothening or elements can be smoothened, stored and dyed when desired or necessary. Thus, dyeing and smoothening can be carried out independent from each other.

One advantage obtained with the method of the present invention is that the surface is smooth and does not or hardly comprise powder because any powder that remained after building on the surface is removed or melted or fused by the treatment of the present invention. Another advantage is the mechanical strength, in particular fatigue strength of the elements. Without being bound by theory it is assumed that by treating elements with the method of the present invention boundary stress is reduced and molecular chains are reordered or restructured with the result of a smoother and stronger surface.

In summary, the present invention provides a method which can be carried out at room temperature or slightly above or below room temperature in a relatively short time and yields elements of very high quality with a smooth surface and without damage to delicate parts. The use of milling, grinding, or polishing steps or other mechanical treatment steps is avoided and nevertheless a high quality finishing is obtained.

The method of the present invention allows to not only smoothen but also functionalize elements to improve their properties and/or. This is achieved by contacting elements with a functionalizing agent together with solvent or directly after solvent treatment as long as the surface is still soft.

A functionalizing solution or functionalizing agent can be applied to the element either together with the smoothening solvent or to the element obtained after application of solvent. A functionalizing agent is any agent that provides the surface with positive properties, such as with regards to the appearance, color, and/or smoothness. A functionalizing agent can provide for a hard and/or glossy surface, a deep black surface or a surface in a desired color tone, a specific texture of the surface, a metalized surface that optionally can be galvanized afterwards, i.e. a priming layer for galvanization. The functionalizing agent can also comprise fibers or other reinforcing agents, which can either result in a reinforced layer and/or in a texturized layer. It is also possible to use a plasticizer as functionalizing agent to provide for a smooth and soft surface. These functionalizing agents can be used as known to the skilled person, i.e. in concentrations, at temperatures and in time periods that are usually used for such agents. The method of the present invention allows to use such functionalizing agents and to provide functionalized surfaces in an easy way. Thus, the method of the present invention is very versatile and allows the creation of different surfaces as it is desired.

For application the functionalizing agent can either be dissolved in the smoothening solvent or a solvent mixture or it can be dissolved in another solvent and can be applied together with the smoothening solvent or solvent mixture. It is also possible to apply a solution of the functionalizing agent shortly after the smoothening step, for example within 1 to 20 minutes after the smoothing step. It is also possible to apply a functionalizing agent in powder form either together with the smoothening solvent or solvent mixture or as long as the surface of the element is still soft or adhesive. For example a dispersion of solvent and powdered functionalizing agent can be used.

It has been found that when using a functionalizing agent, such as a metal powder, it is favorable to use a vaporization chamber with a microwave and/or ultrasound unit for the contacting step with solvent vapor. In particular metal powder with particles in the nanometer range can be distributed in high density and with high uniformity by microwaves and/or ultrasonic waves. Microwaves and/or ultrasonic waves provide that the vapor created smoothens the surface and distributes the functionalizing agent very uniformly.

As the method of the present invention results in elements with a smoothened surface without densifying the surface layer, these elements can be dyed with good results with acid dyes, dispersion dyes, sulfur dyes or other dyes known for dyeing polymers used for additive manufacturing processes, such as polyamide. Thus, a dyed and smooth surface with high quality is obtained. Examples for dyes that are useful for dyeing polyamide are C.I. Acid Red dyes, C.I. Acid Blue dyes, C.I. Acid Yellow dyes, C.I. Acid Black dyes, C.I. Acid Orange dyes, or mixtures thereof, such as CI Acid Red 1, CI Acid Red 138, CI Acid Red 52, CI Acid Blue 40, Nylason red N-2RBL, or mixtures thereof. The acid dyes can for example be used in a concentration of 0.5 to 7.5 wt.-%.

As the elements obtained by the treatment of the present invention have a smooth surface without densification by mechanical means, the temperature for dyeing can be lower than for elements obtained with prior art processes. For example, it has been found that dyeing can be done at temperature of about 40 to 130°C. The time for dyeing can be in a range of about 10 to about 120 minutes.

Generally, after finalizing the treatment steps the element is taken out of the device and dried. Any remaining liquid should be removed and the element can be dried as is known to the skilled person, for example by just leaving the element in open air, or by heating, using an air stream or jet stream or any other means that is usually used for drying elements or components.

The method of the present invention smoothens the surface of elements that have been obtained by an additive manufacturing process using building material in powder form, where the elements have a roughness Rₐ of the surface of the elements before treatment in the range of up to 20 µm, such as 3 to 12 µm. By treatment in accordance of the present invention the elements can be smoothened to reduce the roughness by up to about 15 µm, such as about 5 to 10 µm, such that the roughness after treatment for example is in the range up of 10, such 0.3 to 5, for example 1 to 3 µm. Further reduction of roughness can be obtained by using more than one treatment run. The smoothening effect can be obtained without mechanical pre-treatment. Furthermore, the method of the present invention has further advantages as the steps can be carried out easily and can be automatized.

The method of the present invention can be carried out in a device that has been developed for treatment of elements with solvent vapor and which is also a subject of the present invention.

The device of the present invention comprises a chamber (1) for contacting elements with vapor, at least one element contact area (5), a dosing unit for solvent comprising a solvent feed line for feeding solvent into chamber (1) from a solvent container (13), and a dosing means, and optionally comprises at least one distributor, a withdrawal unit comprising a pump (12), and/or a recovery unit comprising at least one filter unit or a trap. One embodiment of the device of the present invention is shown in Fig. 1 and comprises a vacuum unit as chamber (1). This device uses vacuum for vaporizing the solvent or solvent mixture to be applied to elements and comprises a vacuum unit 1 as shown in Figure 1 with
- 1: vacuum unit
- 2: vacuum lid
- 3: engine Motor
- 4: fan propeller
- 5: element contact area
- 6: element
- 7: vacuum tube
- 8: pressure gauge
- 9: solvent feed line
- 10: activated carbon filter
- 11: activated carbon
- 12: vacuum pump
- 13: solvent container
- 14: solvent
- 15: stop valve
- 16: feed pump
- 17: flow element
- 18: vacuum rotary transmission
- 19: venting valve
- 20: solvent/air mixture

Another embodiment of a device of the present invention is a microwave or ultrasound device, wherein vaporization of the solvent or solvent mixture is obtained by using microwaves and/or ultrasonic waves. In this case, microwaves or ultrasonic waves are applied to the chamber by a microwave unit or a ultrasound unit, respectively. The microwave or ultrasound unit can be applied internally or externally. It is preferred that microwaves and/or ultrasonic waves are applied from outside to the chamber. The amount and wave length of the microwaves and/or ultrasonic waves can be adapted as is known to the skilled person such that solvent in the chamber is vaporized. Vaporization with microwaves and/or ultrasonic waves can be carried out at any convenient temperature, such as ambient temperature, and at any convenient pressure, such as ambient pressure, as long as the solvent is vaporized. It is also possible to use negative or positive pressure.

After treatment of elements the solvent/air mixture is withdrawn from the chamber and can be passed to a recovery unit which comprises at least one filter unit and/or a recovery trap. By passing the solvent/air mixture through the recovery unit, solvent is adsorbed by the at least one filter unit and/or is condensed in a recovery trap. The recovered solvent can then be used again for the method of the present invention. Therefore, the use of a recovery unit contributes to an efficient and environmentally friendly process.

It has been found that activated carbon is useful as filter means as it is abundantly available and is active in absorbing the solvent or solvent mixture used for the process of the present invention efficiently and also efficiently desorbs the solvent.

The number of cycles or runs for the filter unit before exchange and the number of units used in a specific process can be determined easily by a person skilled in the art.

The solvent can be regenerated by desorption from the filter unit. For desorption, the filter unit, for example an activated carbon unit, can be heated to desorb the solvent. In another embodiment, an air stream having a temperature beyond the boiling temperature of the solvent is passed through the filter unit. Thereafter, the air stream enriched with desorbed solvent is passed to a unit for recovery of the solvent by condensation.

It is also possible to heat the air used for desorption and/or the filtration unit by microwaves and/or ultrasonic waves, either alone or in addition to heating the air stream. For condensation, any trap that is known from distillation processes can be used. In one embodiment, a cold trap, such as a metal tube or a glass vessel can be used. The metal tube can be a tube made from any metal that is inert with regard to the solvent, such as copper or aluminum or any other metal or alloy. The tube can be straight, bent, curved, crooked, or can be in the form of a spiral. Moreover, the tube can be cooled by a heat exchange unit and/or a fluid bath or any other known means. By cooling the solvent, HFIP or a solvent mixture can be condensed and drops into a collecting vessel, such as a collecting jar or a collecting bottle. HFIP has a relatively high density (1.6 kg/L) which provides for fast running down of the condensed solvent. The air, separated from HFIP vapor having a high temperature, can be passed again into the filtration unit to start a new desorption/condensing cycle.

The device of the present invention can be used to treat elements with solvent vapor. The solvent to be vaporized can be a solvent or a mixture of solvents, such as one or more halogen containing solvents like HFIP, organic solvents like acetone or other solvents that preferably have a boiling point in the range of about 40°C to about 100°C, or mixtures of these solvents. One example for a solvent is HFIP or a mixture comprising HFIP. In the following description of the device HFIP is mentioned, but any other solvent could be used instead as long as the boiling point is in a suitable range.

The element to be treated can be any element that should be treated with a vapor or a solvent in gaseous form, respectively. An example for an element to be treated is an element obtained by an additive manufacturing process, in particular an element as described above.

The device comprises a chamber for treating an element with a solvent in gaseous form, wherein a solvent is vaporized and is in contact with at least one element and wherein the solvent is recovered by a recovery means, such as a filter unit or a cold trap. For example, after treatment the air/solvent mixture is withdrawn from the chamber and solvent is recovered by passing it through a filter unit with at least one filter element. The filter element can be made of any material that is used for solvent recovery such as activated carbon. The filter material can be in the form of a membrane, a powder, particles, granules or any other form known to the skilled person. It is also possible to recover solvent by using known solvent recovery means such as cold traps.

Figure 1 shows an embodiment of the device for treatment of elements of the present invention. The vacuum device comprises a vacuum unit 1 with a lid 2 for closing the vacuum unit. Elements 6 to be treated are positioned on element contact area 5. Solvent 14 to be used for treatment of the surface of elements 6 is introduced into the vacuum unit 1 from solvent container 13 via solvent feed line 9. Solvent 14 is introduced into the vacuum unit 1 by a feed pump 16 and introduction is controlled via stop valve 15. To improve contact between gaseous solvent and element at least one fan propeller 4 can be provided which is driven by an engine 3 connected to the fan propeller 4 via a vacuum-tight rotary transmission 18. To vaporize solvent 14, vacuum unit 1 is evaporated by a vacuum pump 12 via vacuum tube 7. After evaporation the vacuum unit 1 comprises a solvent/air mixture 20. The pressure inside the vacuum unit is monitored by a pressure gauge 8. Element(s) 6 are in contact with the solvent vapor for a predetermined time period. Thereafter, pressure is released via venting valve 19 and solvent is removed via vacuum tube 7. The solvent/air mixture 20 is withdrawn from the vacuum unit 1 by vacuum pump 12 and is passed through at least one filter 10 comprising activated carbon 11. By passing through the filter the solvent is absorbed by activated carbon and can be recovered and reused.

The method of the present invention provides for elements with smooth surface that can be used for many purposes. The elements obtained with the method of the present invention are particularly useful for in the medicinal and food industry. For medicinal devices as well as for devices that are used in food technology, smooth surfaces are important not only for esthetical reasons but also for hygienic reasons. Furthermore, the treatment is carried out with a solvent that does not change the elements chemically so that no toxic side products are created. Moreover, elements obtained by additive manufacturing using powder as building material or that have been treated by mechanical grinding or milling have powder on the surface that could be contaminating, i.e. could be taken up by the body when it is on a medicinal product that is inserted in the body or could be taken up by food that is in contact with such an element. This is avoided when using the treatment of the present invention where any powder remaining on the surface after the manufacturing process is "melted in" by treatment with the solvent. Thus, the elements obtained by the method of the present invention are particularly useful for medicinal and food processing devices.

The invention is further explained by the following examples which are not deemed to be restrictive.

### Example 1

A vacuum device as shown in Figure 1 was used to treat polyamide elements: (having a grey color) obtained by an MJF process. The elements had a surface roughness of Rₐ = 9; R_{z} = 50. Elements 6 were laid on an element contact area 5 of vacuum unit 1 and the unit was closed with vacuum lid 2. Engine 3 driving fan propeller 4 was switched on to provide for circulation of air. Then vacuum pump 12 was switched on and air was withdrawn until pressure gauge 8 showed a pressure of 0.1 bar (absolute). Then vacuum pump 12 was switched off. 5 ml of HFIP as solvent 14 were injected into vacuum chamber 1 via solvent feed line 9. The solvent vaporized and the HFIP vapor was circulated in the vacuum chamber for 10 minutes. The vacuum unit was neither cooled nor heated. After 10 minutes circulation vacuum pump 12 was switched on again and venting valve 19 was opened, whereby solvent was withdrawn from the vacuum chamber and fed into filter element 10. Venting valve 19 was adapted such that about the same volume of air was introduced as volume of solvent is withdrawn. In other words, the pressure remains in about the same range during this step. The withdrawing step was carried out for about 30 minutes. After 30 minutes vacuum pump 12 was switched off. Engine 3 and thereby also fan propeller 4 was also switched off. Then vacuum lid 2 was opened and elements 6 were removed and dried for 4 hours in a convection oven at 70°C.

The elements obtained were black and has clear contours, edges no or minimal rounding of edges, no waviness. The surface had high quality, it was smooth and firm. The roughness could be reduced significantly:
Roughness of the element after treatment: Rₐ = 1.1; R_{z} = 7

### Example 2

A vacuum device as shown in Figure 1 was used to treat polyamide elements: obtained by an SLS process. The elements had a surface roughness of Rₐ = 12; R_{z} = 64. Elements 6 were laid on an element contact area 5 of vacuum unit 1 and the unit was closed with vacuum lid 2. Engine 3 driving fan propeller 4 was switched on to provide for circulation of air. Then vacuum pump 12 was switched on and air was withdrawn until pressure gauge 8 showed a pressure of 0.1 bar (absolute). Then vacuum pump 12 was switched off. 5 ml of HFIP as solvent 14 were injected into vacuum chamber 1 via solvent feed line 9. The solvent vaporized and the HFIP vapor was circulated in the vacuum chamber for 15 minutes. The vacuum unit was neither cooled nor heated. After 15 minutes circulation vacuum pump 12 was switched on again and venting valve 19 was opened, whereby solvent was withdrawn from the vacuum chamber and fed into filter element 10. Venting valve 19 was adapted such that about the same volume of air was introduced as volume of solvent was withdrawn. In other words, the pressure remained in about the same range during this step. The withdrawing step was carried out for about 45 minutes. After 45 minutes vacuum pump 12 was switched off. Engine 3 and thereby also fan propeller 4 was also switched off. Then vacuum lid 2 was opened and elements 6 were removed and were dried for 12 hours under an exhaust hood and thereafter were dried in a convection oven at 70°C for 4 hours. The elements obtained after this treatment had clear contours, minimal rounding of edges, no waviness The surface was smooth.

Roughness after treatment: Rₐ = 1.7; R_{z} = 10

## Claims

1. A method for treatment of polymer elements obtained by an additive manufacturing process comprising applying on the element a solvent comprising hexafluoroisopropanol and thereafter removing the solvent and optionally recovering the solvent.

2. The method according to claim 1, wherein the solvent is applied for a period of about 1 second to about 60 minutes..

3. The method of one of the preceding claims, wherein the solvent is applied in liquid form, optionally at a temperature in the range from about -3°C up to the boiling point of the solvent used for a period of about 1 second to about 35 minutes; or is applied in vapor form, optionally for a time period of about 2 minutes to about 45 minutes.

4. The method of one of the preceding claims, wherein the solvent is removed by extracting the vapor and/or by drying the elements in an oven for a period of about 5 minutes to about 48 hours.

5. The method of one of the preceding claims, wherein the solvent is applied under a pressure of about 0.01 to about 0.9 bar.

6. The method of one of the preceding claims further comprising additionally applying at least one functionalizing agent on the element.

7. The method of claim 6, wherein the functionalizing agent comprises at least one agent selected from a colorant, a dye, a fiber, a hardening agent, a metallizing agent, a filler, a base, a finishing agent, and/or a plasticizer.

8. The method of one of claims 6 or 7, wherein a colorant or dye solution is applied having a temperature in the range of about 60 to about 95°C, wherein the temperature is maintained over the treatment period or is increased or decreased continuously or incrementally.

9. The method of one of the preceding claims, wherein the element has been obtained by a sintering/melting process, such as a multi-jet fusion or a laser sintering process, a binder-jetting process, or a light induced process.

10. The method of one of the preceding claims, wherein the polymer is polyamide, acrylate, such as polymethyl methacrylate (PMMA), polyoxy methylene (POM), polyethylene terephthalate (PET), polyether block amide (PEBA), poly carbonate (PC), polyethylene furanoate (PEF), polylactide (PLA), polyvinylchloride (PVC), polyurethane such as thermoplastic polyurethane (TPU), polysulfone (PSU) such as polyethersulfone (PESU), polyetherimide (PEI), styrene polymer or copolymer such as acrylonitrile butadiene styrene (ABS) or triblock polymer of polystyrene and poly(ethylene oxide) blocks (ABA), or a thermoplastic polymer comprising polyetherimide and polycarbonate, or copolymers, blends, or mixtures of these polymers.

11. The method of claims 10, wherein the polymer is a polyamide selected from an aliphatic, semi-aromatic or aromatic polyamide, such as polyamide 6 (PA6), polyamide 6.6 (PA6.6), polyamide 11 (PA11), polyamide 12 (PA12), PA 4.6 (PA4.6), polyamide 612 (PA612), polyphthalamide (PPA); a thermoplastic polyamide or copolyamide, or a blended or filled polyamide, or copolymers, blends, or mixtures thereof.

12. The method of one of the preceding claims, wherein a solvent recovery step is carried out by removing solvent with a filtration unit with absorbed solvent and desorbing the solvent.

13. An element obtained by a method of one of claims 1 to 12, wherein optionally the element has a surface roughness Rₐ of 0.3 to 10 µm.

14. A device for treatment of an element obtained by an additive manufacturing process comprising a chamber 1 with a lid 2, at least one element contact area 5, a dosing unit for solvent comprising a solvent feed line for feeding solvent into chamber 1 from a solvent container 13, and a dosing means, optionally at least one distributor, a withdrawal unit comprising a pump 12, and/or at least one recovery unit comprising at least one filter unit or a recovery trap.

15. The device of claim 14, wherein the chamber is a vacuum unit or chamber comprising a microwave and/or ultrasound unit.
